# EUROPÄISCHE PATENTANMELDUNG

(11) **EP 4 755 190 A1**
(43) Veröffentlichungstag der Anmeldung: **10.06.2026**
(21) Anmeldenummer: 24217754.1
(22) Anmeldetag: 05.12.2024
(51) Int. Cl.: A22C 11/00, B65G 65/23, G09F 19/18

(54) **LEBENSMITTELVERARBEITENDE MASCHINE, HEBEEINRICHTUNG UND VERFAHREN MIT PROJEKTIONSEINRICHTUNG FÜR EIN WARNSYMBOL**

(71) Anmelder: Albert Handtmann Maschinenfabrik GmbH & Co. KG, 88400 Biberach (DE)
(72) Erfinder: Fürgut, Michael, 88400 Biberach (DE)
(74) Vertreter: Grünecker Patent- und Rechtsanwälte PartG mbB

(57) **Zusammenfassung**

Die Erfindung betrifft eine lebensmittelverarbeitende Maschine, insbesondere Füllmaschine oder Kutter, mit einer Hebeeinrichtung 2 über die ein in einer Aufnahme gehaltener Behälter für Lebensmittel aus einer unteren Position U in eine obere Entleerposition E und zurück bewegbar ist. Um eine entsprechende lebensmittelverarbeitende Maschine und ein entsprechendes Verfahren noch sicherer zu machen, ist eine Projektionseinrichtung 7 vorgesehen, die derart ausgebildet und angeordnet ist, dass ein optisches Warnsymbol 6 auf und/oder über den Boden 9 projiziert werden kann, um einen durch die Hebeeinrichtung 2 bedingten Kollisions-Gefahrenbereich zu kennzeichnen.

## Beschreibung

Die Erfindung betrifft eine lebensmittelverarbeitende Maschine, eine Hebeeinrichtung sowie ein Verfahren zum Beschicken einer lebensmittelverarbeitenden Maschine gemäß den Oberbegriffen der Ansprüche 1, 12 und 13.

In der Nahrungsmittelindustrie werden zur Beschickung von lebensmittelverarbeitenden Maschinen, beispielsweise Vakuumfüllmaschinen oder Kuttern, Hebeeinrichtungen eingesetzt. Diese Hebeeinrichtungen sind üblicherweise als Armhebeeinrichtungen, als Masthebeeinrichtung oder als Kippeinrichtung vom Typ Swing-Loader realisiert und können an eine Maschine, beispielsweise eine Vakuumfüllmaschine, einen Kutter, einen Fleischwolf, Mischer oder einen Bodentrichter bzw. Silo einer Füllmaschine etc. angebaut werden.

Diese Hebeeinrichtungen sind ausgelegt zur Aufnahme von zum Teil standardisierten Behältern, beispielsweise fahrbaren (d.h. mit Rollen versehenen) Wagen, insbesondere Förderwagen nach DIN 9797, die auch als Brätwagen bezeichnet werden. Dabei wird der Brätwagen typischerweise derart in eine Aufnahme der Hebeeinrichtung verbracht, dass er sicher gegen Herausfallen verriegelt ist und mit der Hebeeinrichtung beispielsweise nach oben über den Fülltrichter einer Vakuumfüllmaschine verbracht wird. Dort wird der Brätwagen dann in den Trichter entleert. Anschließend wird der Brätwagen mit der Hebeeinrichtung wieder zurück in die Ausgangsposition gebracht und vom Bediener durch Lösen der Verriegelung an der Hebeeinrichtung wieder entnommen. Bei der Beschickung von Kuttern wird entsprechend die Kutterschüssel beschickt.

Bei den Nahrungsmittelmaschinen existiert die Gefahr, dass eine sich unter dem abwärts fahrenden Behälter befindende Person durch eine automatische und damit möglicherweise unbeaufsichtigte Abwärtsbewegung verletzt wird. Dies kann auch passieren, wenn die Bewegung manuell gestartet wird und eine Person unvermittelt in den Gefahrenbereich tritt. Damit entsprechende Maschinen CE-konform umgesetzt werden können, müssen diese bestimmte Sicherheitsmechanismen aufweisen. Diese Sicherheitsforderung wird in der Praxis zum Beispiel durch eine sogenannte "Totmannsteuerung" realisiert, bei welcher der Bediener beim Absenken des Brätwagens ab einer bestimmten Höhe, die noch vom Behälter bzw. der Hebeeinrichtung zum Boden bleibt, ständig eine Taste betätigen muss, andernfalls wird die Abwärtsbewegung sofort gestoppt. Aus der EP 2 489 273 B1 ist beispielsweise bereits eine Einrichtung zur Kollisionserkennung bekannt.

Selbst wenn die Maschinen sicher sind, wird das automatische Abfahren der Hebeeinrichtungen ohne zusätzliche Absicherung um die Hebeeinrichtung herum bei manchen Kunden als kritisch betrachtet.

Allerdings sind mechanische Barrieren/Zäune teuer, umständlich und bringen andere Gefahren mit sich - verkomplizieren jedenfalls das Handling. Akustische Signale sind in der lauten Produktionsumgebung ebenfalls nicht sinnvoll bzw. wirksam.

Hiervon ausgehend liegt der vorliegenden Erfindung die Aufgabe zugrunde, eine lebensmittelverarbeitende Maschine, eine Hebeeinrichtung sowie ein Verfahren zum Beschicken einer lebensmittelverarbeitenden Maschine bereitzustellen, die auf einfache Art und Weise die Sicherheit erhöhen können.

Erfindungsgemäß wird diese Aufgabe durch die Merkmale der Ansprüche 1,12 und 13 gelöst.

Erfindungsgemäß weist die lebensmittelverarbeitende Maschine eine Hebeeinrichtung auf, über die ein in einer Aufnahme gehaltener Behälter für Lebensmittel aus einer unteren Position in eine obere Entleerposition und zurück bewegbar ist. Die lebensmittelverarbeitende Maschine kann z.B. eine Füllmaschine, insbesondere eine Vakuumfüllmaschine, ein Kutter, ein Fleischwolf oder ein Mischer sein. Diese lebensmittelverarbeitenden Maschinen weisen eine Einrichtung zur Aufnahme des Lebensmittels aus dem Behälter auf, insbesondere einen Fülltrichter, einen Bodentrichter oder Silo auf.

Ein solcher Behälter kann beispielsweise ein Wagen, insbesondere ein Förderwagen bzw. Brätwagen sein. Die untere Position U ist eine Position, in der der Behälter z.B. in eine Aufnahme der Hebeeinrichtung eingeschoben wird und dort einrastet bzw. verriegelt wird. Unter einer "oberen Entleerposition" versteht man die Position, in der die Aufnahme z.B. in einer oberen Position ist, in der der Behälter derart verkippt ist, dass der Inhalt z.B. in einen Trichter oder eine Schüssel eingefüllt werden kann.

Erfindungsgemäß weist die lebensmittelverarbeitende Maschine eine Projektionseinrichtung auf, die derart ausgebildet und angeordnet ist, dass ein optisches Warnsymbol auf und / oder über den Boden projiziert werden kann, um einen durch die Hebeeinrichtung bedingten Kollisions-Gefahrenbereich zu kennzeichnen, das bedeutet, auf einen Bewegungsbereich der beweglichen Teile der Hebeeinrichtung, in dem es zu einer Kollision mit dem Bediener kommen könnte, aufmerksam zu machen. So kann verhindert werden, dass Personen sich in diesen Bereich begeben oder dort Sachen abgestellt werden. Eine entsprechende Kennzeichnung erhöht nochmals die Sicherheit für den Bediener. Dabei muss das Warnsymbol nicht im gesamten Kollisions- Gefahrenbereich bzw. Bewegungsbereichs angeordnet sein, sondern kann nur in einem Teil des Gefahrenbereichs angeordnet sein, oder diesen umgeben. Wichtig ist lediglich, dass das Wamsymbol aufmerksam macht. Das Warnsymbol kann angezeigt werden, wenn sich ein Behälter in der Aufnahme befindet aber auch bei einer Leerfahrt ohne eingeschobenen Behälter.

Da ein entsprechendes Warnsymbol lediglich projiziert wird, kann diese Anzeige nicht durch die rauen Bedingungen in den Produktionshallen, insbesondere durch die Wägen, die mit ihren Rädern in die Aufnahmen geschoben werden, beschädigt werden. Das Warnsymbol hält auch Reinigungsprozessen mit Hochdruckreinigern und Reinigungsmitteln stand.

Die lebensmittelverarbeitenden Maschinen werden teilweise mehrmals am Tag bzw. pro Schicht für verschiedenen Anwendungen verwendet und werden dazu an verschiedenen Stellen positioniert. Vorzugsweise kann dann das Warnsymbol einfach mitwandern. Jedenfalls kann der Bediener genau erkennen, in welchem Bereich er sich nicht aufhalten soll und nichts abstellen darf.

Das Warnsymbol kann beispielsweise ein Gefahrenwarnsymbol, insbesondere ein Piktogramm sein, zumindest aber ein Bereich in einer bestimmten Signalfarbe oder aber eine Umrahmung des Gefahrenbereichs. Idealerweise betreten die Personen diesen Bereich nicht.

Eine mögliche Ausführungsform ist, dass das Warnsymbol zusätzlich oder alternativ zur Projektion des Warnsymbols auf den Boden als virtuelle Darstellung in den Raum über dem Boden projiziert wird, um deutlich zu machen, dass dieser Bereich nicht betreten werden darf. Dies stellt ebenfalls eine zusätzliche Sicherheit beim Bedienen der lebensmittelverarbeitenden Maschine dar. So kann beispielsweise ein virtuelles Bild, insbesondere ein 3D Hologramm projiziert werden, das sich dann auch in Richtung Höhe erstreckt und noch besser, insbesondere auch aus der Ferne erkannt werden kann.

Gemäß einer bevorzugten Ausführungsform umfasst die lebensmittelverarbeitende Maschine ein Gehäuse, wobei die Projektionseinrichtung derart angeordnet ist, dass das Warnsymbol seitlich neben dem Gehäuse auf und/oder über den Boden projiziert werden kann. Dies ist vorteilhaft, da die Hebeeinrichtung mit der Aufnahme ebenfalls seitlich angeordnet ist.

Gemäß einer weiteren bevorzugten Ausführungsform umfasst die lebensmittelverarbeitende Maschine eine Einrichtung zur Aufnahme des Lebensmittels aus dem Behälter, insbesondere einen Fülltrichter, Bodentrichter oder Silo, wobei die Projektionseinrichtung derart angeordnet ist, dass das Warnsymbol seitlich neben der Einrichtung auf und/oder über den Boden projiziert werden kann. Dazu kann wie allgemein üblich ein Fülltrichter direkt über dem Gehäuse der Maschine angeordnet sein oder aber ein Bodentrichter oder Silo ist jeweils über Leitungen mit weiteren Maschinenkomponenten im Gehäuse verbunden. Dann kann vorteilhafterweise das Warnsymbol seitlich neben dem Bodentrichter oder Silo im Gefahrenbereich der Hebeeinrichtung erzeugt werden.

Dass der Behälter bei seiner Bewegung in Richtung untere Position U nach unten gegebenenfalls irgendwann die Projektion, d.h. das Warnsymbol, verdeckt, stellt kein Problem dar, da das erst ab einer Hubhöhe passiert, in der sich ohnehin niemand unter den Behälter oder die Hebeeinrichtung begibt.

Sollte das Warnsymbol ausschließlich in die Luft, d.h. über den Boden, projiziert werden, so ist es vorteilhaft, wenn der Abstand des unteren Endes des Warnsymbols vom Boden nicht zu groß ist, d.h. das Warnsymbol im Sichtbereich des Bedieners ist.

Vorteilhafterweise ist die Projektionseinrichtung derart angeordnet, dass das Warnsymbol zumindest teilweise auf einen Bereich des Bodens projizier bar ist, der unterhalb der Aufnahme mit eingesetztem Behälter liegt, wenn man die Aufnahme mit eingesetztem Behälter in einer unteren Position betrachtet, oder diesen Bereich zumindest abschnittsweise umgibt. Das heißt, dass wirksam verhindert werden kann, dass sich der Bediener in einen Bereich begibt, in dem von oben die Aufnahme mit oder ohne den Behälter auf ihn stößt. Im Falle, dass das Warnsymbol über den Boden projiziert wird, kann die Projektionseinrichtung derart angeordnet sein, dass das Warnsymbol zumindest teilweise in oder über einen Bereich der Aufnahme mit eingesetztem Behälter liegt oder diesen Bereich zumindest teilweise umgibt, wenn man die Aufnahme mit eingesetztem Behälter in einer unteren Position betrachtet. Somit kann der Raum, in dem sich der Bediener keinesfalls aufhalten sollte, gut gekennzeichnet werden.

Vorteilhafterweise ist die Hebeeinrichtung eine Armhebeeinrichtung, eine Masthebeeinrichtung oder eine Kippeinrichtung vom Typ Swing-Loader. Wenn es sich um eine Armhebeeinrichtung handelt, muss sich das Warnsymbol nicht unterhalb des gesamten Bereichs des Hebearms erstrecken, da der Bediener weiß, wenn ein entsprechendes Warnsymbol auf und/oder über dem Boden projiziert wird, dass er sich auch nicht in der Nähe des Warnsymbols aufhalten darf.

Vorteilhafterweise umfasst die Projektionseinrichtung einen optischen Projektor, der ein Bild auf eine Fläche, hier den Boden, projizieren kann und/oder einen Projektor zur Erzeugung eines virtuellen Bildes im Raum, insbesondere einen 3D-Hologrammprojektor. Entsprechende Projektoren können einfach in die lebensmittelverarbeitende Maschine integriert werden und z.B. von der Steuerung angesteuert werden.

Vorteilhafterweise ist die Projektionseinrichtung vorzugsweise seitlich, an der lebensmittelverarbeitenden Maschine, angeordnet, insbesondere
am Gehäuse der lebensmittelverarbeitenden Maschine, vorzugsweise in der Seitenwand integriert oder
an einer Einrichtung zur Aufnahme des Lebensmittels, insbesondere einem Fülltrichter, Bodentrichter oder Silo, oder
am Boden der lebensmittelverarbeitenden Maschine.

Ist die Projektionseinrichtung an der lebensmittelverarbeitenden Maschine, insbesondere seitlich angeordnet kann von dieser Stelle aus das Warnsignal gut in den Kollisions-Gefahrenbereich projiziert werden. Ist die Projektionseinrichtung am Gehäuse der lebensmittelverarbeitenden Maschine angeordnet, ist dies sehr vorteilhaft, da das Gehäuse statisch ist, also kein bewegliches Teil, so dass das Warnsymbol immer an der gleichen Stelle abgebildet werden kann.

Befindet sich z.B. ein Bodentrichter oder Silo über Leitungen beabstandet zum Rest der lebensmittelverarbeitenden Maschine, so ist die Projektionseinrichtung in diesem Bereich angeordnet.

Die Projektionseinrichtung kann auch an der Hebeeinrichtung angeordnet sein, insbesondere an einem statischen Teil der Hebeeinrichtung.

Die Projektionseinrichtung ist nämlich vorzugsweise an einem statischem Teil befestigt, so dass sich das Warnsymbol nicht bewegt.

Gemäß einer bevorzugten Ausführungsform umfasst die lebensmittelverarbeitende Maschine eine Steuerung, die die Projektionseinrichtung ansteuert, wobei die Projektionseinrichtung ein-und ausschaltbar ausgebildet ist und spätestens dann angeschaltet wird, wenn die Hebeeinrichtung ein Signal zum Anheben der Aufnahme von der Steuerung enthält. Dann ist sichergestellt, dass sich keine Person in den Kollisionsgefahrenbereich stellt, und zwar bereits zu einem Zeitpunkt, wenn sich die Aufnahme nach oben bewegt.

Die Projektionseinrichtung kann auch separat befestigt sein, insbesondere an einer Wand, Decke oder separaten Halterung und mit einer Steuereinrichtung der lebensmittelverarbeitenden Maschine verbunden sein, derart, dass die Projektionseinrichtung von der Steuereinrichtung ansteuerbar ist. Bei dieser Ausführungsform kann das Warnsymbol statisch sein. Es ist auch möglich mehrere Projektionseinrichtungen an unterschiedlichen Stellen im Produktionsraum anzuordnen und bei Änderung der Position der Maschine eine zu dieser Position gehörenden Projektionseinrichtung anzusteuern.

Gemäß dem erfindungsmäßigen Verfahren zum Beschicken einer lebensmittelverarbeitenden Maschine nach mindestens einem der Ansprüche 1 bis 7 wird ein Behälter mit Lebensmitteln in einer Aufnahme einer Hebeeinrichtung der lebensmittelverarbeitenden Maschine aufgenommen und der in der Aufnahme gehaltene Behälter aus einer unteren Position in eine obere Entleerposition angehoben, entleert und zurückbewegt. Über eine Projektionseinrichtung wird ein optisches Warnsymbol auf und/oder über den Boden projiziert, um einen Kollisions-Gefahrenbereich zu kennzeichnen. Der Behälter kann auch erst nach oben in eine Warteposition und dann in eine obere Entleerposition verfahren werden.

Die Erfindung betrifft auch eine Hebeeinrichtung für eine lebensmittelverarbeitende Maschine, insbesondere nach mindestens einem der Ansprüche 1 - 11, über die ein in einer Aufnahme gehaltener Behälter für Lebensmittel aus einer unteren Position in eine obere Entleerposition und zurück bewegbar ist, wobei eine Projektionseinrichtung vorgesehen ist, die derart ausgebildet und angeordnet ist, dass ein optisches Warnsymbol auf und/oder über den Boden projiziert werden kann, um einen durch die Hebeeinrichtung bedingten Kollisions-Gefahrenbereich zu kennzeichnen.

Dabei gelten alle Merkmale der Anprüche 1- 11, die die Hebeeinrichtung beschreiben auch für den Anspruch 13.

Die Erfindung wird nachfolgend unter Bezugnahme der folgenden Figuren näher erläutert:
Figur 1 zeigt grob schematisch eine Ausführungsform einer lebensmittelverarbeitenden Maschine, wobei sich die Aufnahme in einer unteren Position befindet
Figur 2 zeigt die in Figur 1 gezeigte Ausführungsform, wobei sich die Aufnahme in einer mittleren Position befindet
Figur 3 zeigt die in Figuren 1 und 2 gezeigte Ausführungsform, wobei sich die Aufnahme in einer oberen Einkippposition befindet
Figur 4 zeigt eine weitere Ausführungsform, wobei sich die Aufnahme in einer oberen Einkippposition E befindet.

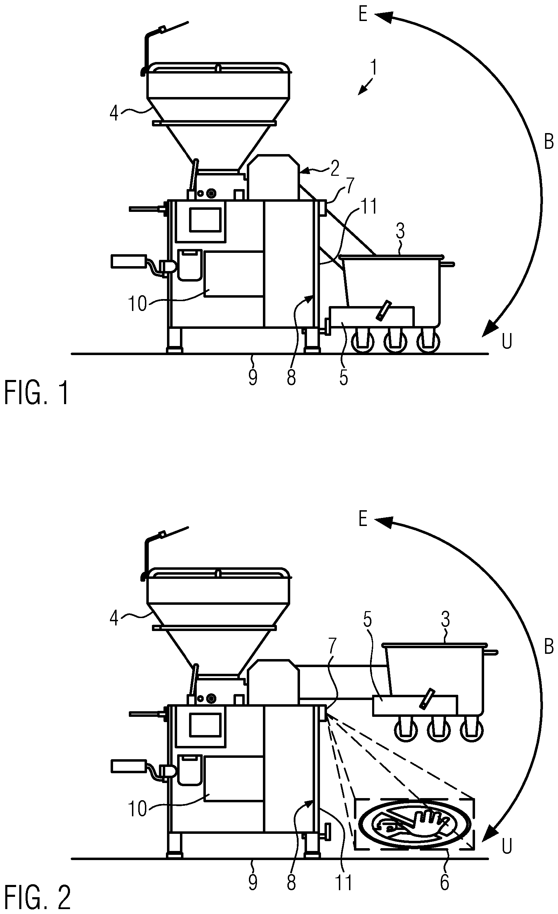

Figur 1 bis 3 zeigen ein bevorzugtes Ausführungsbeispiel zum Beschicken von einer lebensmittelverarbeitenden Maschine mit einer Armhebeeinrichtung als Hebeeinrichtung 2. Genauso geeignet ist jedoch auch eine Masthebeeinrichtung. Bei diesem Ausführungsbeispiel ist die Hebeeinrichtung 2 mit der Maschine 1, hier einer Füllmaschine, verbunden.

Ebenso eignet sich die Vorrichtung zum Beschicken eines Kutters, eines Fleischwolfs oder eines Mischers. Die Maschine weist einen Behälter 3 zur Aufnahme von Lebensmitteln, z.B. Wurstbrät, auf. Der Behälter, z.B. ein Förderwagen bzw. Brätwagen, hat beispielsweise ein Füllvolumen in einem Bereich von 100 bis 1000 Liter. Bei Kippvorrichtungen für Großbehälter kann das Volumen noch weitaus größer sein, d.h. z.B. bis zu 5000 I. Hier ist der Behälter 3 als mit Rollen versehener fahrbarer Behälter ausgebildet. Der Behälter 3 wird in einer nicht speziell dargestellten Aufnahme 5 der Hebeeinrichtung 2 derart befestigt, dass er sicher gegen Herausfallen verriegelt ist. Dies kann erfolgen, indem der Behälter in der unteren Position U in die U-förmige Aufnahme 5 geschoben wird und darin einrastet und verriegelt wird. Wie aus Fig. 1-3 hervorgeht, ist der Behälter 3 an einem Arm 12 angeordnet. Zum Entleeren ist der Behälter 3 dabei beispielsweise um eine nicht eigens dargestellte Achse relativ zum Arm 12 über einen nicht näher erläuterten Schwenkmechanismus schwenkbar. Der Arm 12 wiederum ist z.B. um eine weitere Achse zum Ausüben einer Hebe- und Senkbewegung schwenkbar angeordnet. Im Betrieb der Vorrichtung kann eine Hebe- und Schwenkbewegung auch überlagert werden.

Die Vorrichtung weist weiter einen Antrieb auf. In diesem Ausführungsbeispiel ist die Hebeeinrichtung z.B. als hydraulische Hebeeinrichtung ausgebildet und umfasst einen Hydraulikzylinder, durch dessen Bewegung über einen entsprechenden Mechanismus der Arm 12 heb- und senkbar ist. Die Maschine 1, hier z.B. die Füllmaschine 11, weist einen Aufnahmebereich für das Lebensmittel, hier den Fülltrichter 4, auf. Das Lebensmittel wird in den Fülltrichter 4 eingekippt und weiterverarbeitet.

Wie aus den Figuren 1 bis 3 hervorgeht, weist die lebensmittelverarbeitende Maschine 1 einen Projektor 7 auf, der derart ausgebildet und angeordnet ist, dass ein optisches Warnsymbol 6 auf den Boden 9 projiziert werden kann, um einen durch die Hebeeinrichtung 2 bedingten Kollisions-Gefahrenbereich zu kennzeichnen, d.h. darauf aufmerksam zu machen. Unter dem "Kollisions-Gefahrenbereich" versteht man den Bewegungsbereich B der Aufnahme 5 mit dem Behälter 3 und dem Arm 12, wo es zu einer Kollision mit einem Bediener oder dort abgestellten Gegenständen kommen kann.

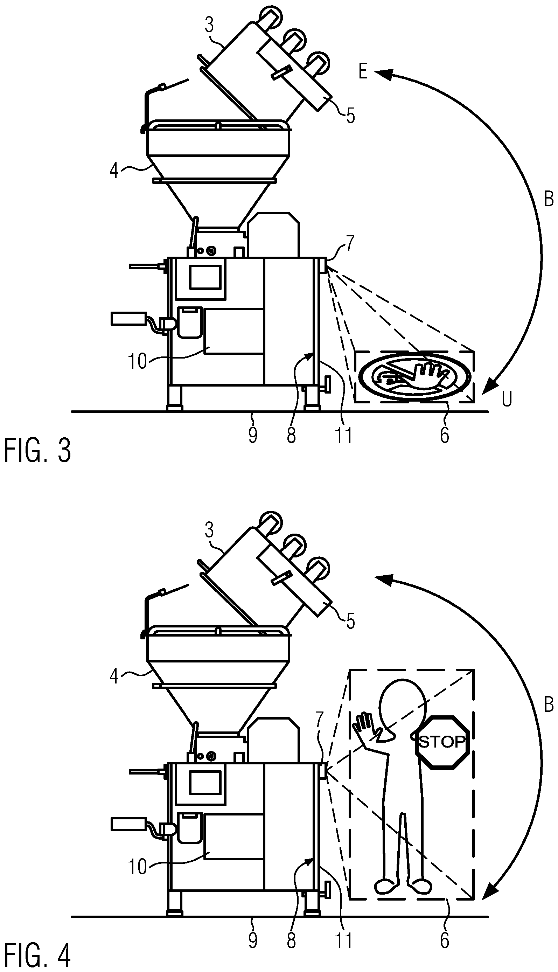

Figur 1 zeigt die Aufnahme 5 mit dem Behälter 3 in einer unteren Position U. Fig. 2 zeigt die Aufnahme 5 mit dem Behälter 3, nachdem sie sich bereits nach oben bewegt hat und sich in einer mittleren Position befindet und Figur 3 zeigt die Aufnahme 5 mit dem Behälter 3 in einer Einkippposition E. Nach dem Einkippen wird die Aufnahme 5 mit dem leeren Behälter 3 wieder in die untere Position U verfahren. Dabei besteht die Gefahr einer Kollision mit einem Bediener.

Wie insbesondere aus den Figuren 2 und 3 hervorgeht, projiziert die Projektionseinrichtung 7 das Warnsymbol 6 in diesem Ausführungsbeispiel auf den Boden 9. Die Projektionseinrichtung 7 kann dauerhaft das Warnsymbol 6 auf den Boden 9 projizieren oder über an- und ausschaltbar sein, zumindest jedoch spätestens dann das Warnsymbol 6 auf den Boden 9 projizieren, wenn die Aufnahme 5 nach oben bewegt wird. Bei dem in den Figuren 1 bis 3 gezeigten Ausführungsbeispiel weist die lebensmittelverarbeitende Maschine 1 das Gehäuse 8 auf, wobei die Projektionseinrichtung 7 derart angeordnet ist, dass das Warnsymbol 6 seitlich neben dem Gehäuse 8 auf dem Boden projiziert wird.

Dabei ist es unerheblich, ob in einer unteren Position U der Aufnahme, wie beispielsweise in Figur 1 gezeigt ist, sich das projizierte Warnsymbol 6 mit dem Behälter 3 und der Aufnahme 5 überlagert, da in einer solch niedrigen Position keine Gefahr droht und sich ein Bediener nicht unter den Behälter 3 begeben würde.

Die Projektionseinrichtung 7 kann z.B. ein optischer Projektor sein und kann insbesondere in der Seitenwand 11 des Gehäuses integriert sein, hier insbesondere im oberen Drittel. Die Position am Gehäuse 8 ist vorteilhaft, da an dieser Stelle die Projektionseinrichtung auf einfache Weise mit der Steuerung 10 verbunden werden kann. Grundsätzlich könnte die Projektionseinrichtung auch an einer anderen Stelle angeordnet sein, solange das Warnsymbol 6 in oder um den Kollisions-Gefahrenbereich projiziert werden kann. Vorteilhaft ist, wenn das Gehäuse ein nicht-bewegliches Teil ist, so dass das Warnsymbol 6 stets an gleicher Stelle dargestellt wird. Die Projektionseinrichtung kann auch am Boden der Maschine 1 angeordnet sein, wobei das Wamsymbol z. B. über ein Linsensystem an die entsprechende Stelle projiziert werden kann.

Die Projektionseinrichtung 7 kann auch an der Hebeeinrichtung 2 befestigt sein, vorzugsweise an einem Teil der Hebeeinrichtung, das sich nicht bewegt.

Gemäß einer weiteren bevorzugten, nicht dargestellten Ausführungsform umfasst die lebensmittelverarbeitende Maschine 1 z. B. einen Bodentrichter oder Silo, wobei die Projektionseinrichtung derart angeordnet ist, dass das Warnsymbol 6 seitlich daneben auf und/oder über den Boden projiziert werden kann. Der Bodentrichter oder Silo ist über Leitungen mit weiteren Komponenten im Gehäuse verbunden.

Die Projektionseinrichtung 7 kann auch an der Hebeeinrichtung 2 angeordnet sein, insbesondere an einem statischen Teil der Hebeeinrichtung.

Die Projektionseinrichtung 7 kann auch separat befestigt sein, insbesondere an einer Wand, Decke oder separaten Halterung und mit einer Steuereinrichtung der lebensmittelverarbeitenden Maschine 1 verbunden sein, derart, dass die Projektionseinrichtung von der Steuereinrichtung ansteuerbar ist. Bei dieser Ausführungsform ist das Warnsymbol statisch. Es ist auch möglich mehrere Projektionseinrichtungen an unterschiedlichen Stellen im Produktionsraum anzuordnen und bei Änderung der Position der Maschine eine zu dieser Position gehörenden Projektionseinrichtung anzusteuern.

Das Warnsymbol 6 muss nicht unterhalb des gesamten Bewegungsbereichs B bzw. unterhalb des gesamten Kollisionsgefahrenbereichs dargestellt werden, d.h. muss sich nicht zwangsläufig bis zum Gehäuse 8 hin erstrecken, sondern sollte zumindest in einem Bereich des Bodens, der zumindest teilweise unterhalb der Aufnahme 5 mit eingesetztem Behälter liegt, angeordnet sein wobei hier eine Position wie sie in Figur 1 gezeigt ist betrachtet wird. Alternativ kann das Warnsymbol 6 diesen Bereich auch zumindest abschnittsweise umgeben.

Das Warnsymbol 6 kann ein Bild sein, ein Piktogramm, eine farbliche, z.B. rote, Darstellung etc., die den Bediener auf die Gefahr aufmerksam macht. Auf die exakte Position des Warnsymbols 6 kommt es nicht an.

Figur 4 zeigt ein weiteres Ausführungsbeispiel gemäß der vorliegenden Erfindung, das den in Figuren 1 bis 3 gezeigten Ausführungsbeispiel entspricht und beispielhaft die Aufnahme 5 in einer Einkippposition E zeigt.

Der Unterschied zwischen dem ersten Ausführungsbeispiel und diesem Ausführungsbeispiel liegt darin, dass die Projektionseinrichtung 7 das Warnsymbol 6 über dem Boden 7 in den Raum projizieren kann. Es ist auch möglich, dass eine Projektionseinrichtung verwendet wird, die das Warnsymbol auf und über den Boden 9 projiziert.

Die Projektionseinrichtung 7 ist derart ausgebildet, dass sie ein virtuelles Bild seitlich neben das Gehäuse 8 projiziert, um auf den Kollisions-Gefahrenbereich aufmerksam zu machen. Dabei kann es sich um eine 2D- oder 3D-Projektion handeln.

Entsprechende Projektionseinrichtungen sind bekannt und werden daher hier nicht im Detail diskutiert. Bei der Verwendung eines 3D-Hologrammprojektors kann beispielsweise auch, wie aus Figur 4 hervorgeht, eine menschenähnliche Figur in den entsprechenden Kollisions-Gefahrenbereich projiziert werden, die symbolisiert, dass ein Bediener diesen Bereich nicht betritt. Das Warnsymbol 6 ist also zumindest zum Teil in einem Bewegungsbereich der Aufnahme 5 projiziert. Es ist aber auch möglich, dass das Warnsymbol 6 derart ausgestaltet ist, dass es den Bewegungsbereich B der Aufnahme 5 zumindest abschnittsweise umgibt.

Bei dem erfindungsgemäßen Verfahren zum Beschicken einer lebensmittelverarbeitenden Maschine 1 wird ein Behälter mit Lebensmitteln in eine Aufnahme 5 der Hebeeinrichtung 2 der lebensmittelverarbeitenden Maschine 1 geschoben und darin aufgenommen und verriegelt. Der in der Aufnahme gehaltene und darin verriegelte Behälter 3 wird dann aus einer unteren Position U in eine obere Entleerposition E angehoben, entleert und wieder zurückbewegt.

Über eine Projektionseinrichtung 7 wird ein optisches Warnsymbol 6 auf und/oder über den Boden 9 projiziert, um einen Kollisions-Gefahrenbereich zu kennzeichnen, d.h. auf den Kollisions-gefahrenbereich aufmerksam zu machen. Dabei muss sich das Warnsymbol 6 nicht im gesamten Kollisionsgefahrenbereich, d.h. im gesamten Bewegungsbereich B der Aufnahme 5, des Behälters 3 und des Arms 12 befinden, sondern lediglich darauf aufmerksam machen, dass im seitlichen Bereich neben der Maschine 1 kein Zutritt gestattet ist. In diesen Ausführungsbeispielen wird z.B. das Warnsymbol 6 seitlich neben dem Gehäuse 8 der lebensmittelverarbeitenden Maschine im und/oder unterhalb eines Bewegungsbereichs der Aufnahme 5 mit dem Behälter projiziert oder um den Bewegungsbereich B herum projiziert.

Somit kann gemäß der vorliegenden Erfindung die Sicherheit für den Bediener wesentlich erhöht werden.

## Patentansprüche

1. Lebensmittelverarbeitende Maschine (1), insbesondere Füllmaschine mit einer Hebeeinrichtung (2), über die ein in einer Aufnahme (5) gehaltener Behälter (3) für Lebensmittel aus einer unteren Position (U) in eine obere Entleerposition (E) und zurück bewegbar ist,
**gekennzeichnet durch**
eine Projektionseinrichtung (7), die derart ausgebildet und angeordnet ist, dass ein optisches Warnsymbol (6) auf und/oder über den Boden (9) projiziert werden kann, um einen durch die Hebeeinrichtung (2) bedingten Kollisions-Gefahrenbereich zu kennzeichnen.

2. Lebensmittelverarbeitende Maschine (1) nach Anspruch 1, **dadurch gekennzeichnet, dass** die lebensmittelverarbeitende Maschine (1) ein Gehäuse (8) umfasst, wobei die Projektionseinrichtungen (7) derart angeordnet ist, dass das Warnsymbol (6) seitlich neben dem Gehäuse auf und/oder über den Boden (9) projiziert werden kann.

3. Lebensmittelverarbeitende Maschine (1) nach Anspruch 1 oder 2, **dadurch gekennzeichnet, dass** die lebensmittelverarbeitende Maschine (1) eine Einrichtung zur Aufnahme des Lebensmittels (4) aus dem Behälter (3), insbesondere einen Fülltrichter (4), Bodentrichter oder Silo aufweist, wobei die Projektionseinrichtung (7) derart angeordnet ist, dass das Warnsymbol (6) seitlich neben der Einrichtung auf und/oder über den Boden (9) projiziert werden kann.

4. Lebensmittelverarbeitende Maschine nach Anspruch 1, 2 oder 3, **dadurch gekennzeichnet, dass** die Projektionseinrichtung (7) entweder derart angeordnet ist, dass das Warnsymbol (6) zumindest teilweise auf einen Bereich des Bodens projizier bar ist, der unterhalb der Aufnahme (5) mit eingesetzten Behälter (3) liegt, wenn man die Aufnahme (5) in einer unteren Position (U) betrachtet, oder diesen Bereich zumindest abschnittsweise umgibt und/oder
die Projektionseinrichtung (7) derart angeordnet ist, dass das Warnsymbol (6) zumindest teilweise in oder über einen Bereich der Aufnahme (5) mit eingesetztem Behälter (3) projizier bar ist, wenn man die Aufnahme (5) in einer unteren Position (U) betrachtet, oder diesen Bereich zumindest teilweise umgibt.

5. Lebensmittelverarbeitende Maschine (1) nach mindestens einem der Ansprüche 1-4, **dadurch gekennzeichnet, dass** die Hebeeinrichtung (2) eine Armhebeeinrichtung, eine Masthebeeinrichtung oder eine Kippeinrichtung vom Typ Swing-Loader ist.

6. Lebensmittelverarbeitende Maschine (1) nach mindestens einem der Ansprüche 1-5, **dadurch gekennzeichnet, dass** die Projektionseinrichtung (7) einen optischen Projektor, einen Projektor zum Erzeugen eines virtuellen Bildes im Raum, insbesondere einen 3D Hologramm Projektor umfasst.

7. Lebensmittelverarbeitende Maschine (1) nach mindestens einem der Ansprüche 1-5, **dadurch gekennzeichnet, dass**
die Projektionseinrichtung (7) an der lebensmittelverarbeitenden Maschine angeordnet ist, insbesondere
am Gehäuse (8) der lebensmittelverarbeitenden Maschine (1), insbesondere in der Seitenwand (11) integriert ist oder
an einer Einrichtung zur Aufnahme des Lebensmittels (4), insbesondere einem Fülltrichter (4), Bodentrichter oder Silo, oder
am Boden der lebensmittelverarbeitenden Maschine (1).

8. Lebensmittelverarbeitende Maschine (1) nach mindestens einem der Ansprüche 1-7, **dadurch gekennzeichnet, dass** die Projektionseinrichtung (7) an der Hebeeinrichtung (2) angeordnet ist.

9. Lebensmittelverarbeitende Maschine (1) nach mindestens einem der Ansprüche 1-8 **dadurch gekennzeichnet, dass** die Projektionseinrichtung (7) an einem statischen Teil der lebensmittelverarbeitenden Maschine (1) befestigt ist.

10. Lebensmittelverarbeitende Maschine (1) nach mindestens einem der Ansprüche 1-8 **dadurch gekennzeichnet, dass** die lebensmittelverarbeitende Maschine (1) eine Steuerung (10) umfasst, über die die Projektionseinrichtung (7) ansteuerbar ist, wobei die Projektionseinrichtung (7) über die Steuerung (11) ein- und ausschaltbar ist und spätestens dann zur Erzeugung des optischen Warnsignals (6) angeschaltet wird, wenn die Hebeeinrichtung (2) ein Signal zum Anheben der Aufnahme (5) von der Steuerung (10) erhält.

11. Lebensmittelverarbeitende Maschine (1) nach mindestens einem der Ansprüche 1-10, **dadurch gekennzeichnet, dass** die Projektionseinrichtung (7) separat befestigt ist, insbesondere an einer Wand, Decke oder separaten Halterung und mit einer Steuereinrichtung (10) der lebensmittelverarbeitenden Maschine (1) verbunden ist.

12. Verfahren zum Beschicken einer lebensmittelverarbeitenden Maschine, insbesondere nach mindestens einem der Ansprüche 1-11, **dadurch gekennzeichnet, dass** ein Behälter mit Lebensmitteln in einer Aufnahme (5) einer Hebeeinrichtung (2) der lebensmittelverarbeitenden Maschine (1) aufgenommen wird und der in der Aufnahme gehaltene Behälter (3) aus einer unteren Position (U) in eine obere Entleerposition (E) angehoben, entleert und zurückbewegt wird,
**dadurch gekennzeichnet, dass**
über eine Projektionseinrichtung (7) ein optisches Warnsymbol (6) auf und/oder über den Boden projiziert wird um einen Kollision-Gefahrenbereich zu kennzeichnen.

13. Hebeeinrichtung (2) für eine lebensmittelverarbeitende Maschine (1), insbesondere nach mindestens einem der Ansprüche 1 - 11, über die ein in einer Aufnahme (5) gehaltener Behälter (3) für Lebensmittel aus einer unteren Position (U) in eine obere Entleerposition (E) und zurück bewegbar ist, **gekennzeichnet durch**
eine Projektionseinrichtung (7), die derart ausgebildet und angeordnet ist, dass ein optisches Warnsymbol (6) auf und/oder über den Boden (9) projiziert werden kann, um einen durch die Hebeeinrichtung (2) bedingten Kollisions-Gefahrenbereich zu kennzeichnen.

## Geänderte Patentansprüche

### Geänderte Patentansprüche gemäss Regel 137(2) EPÜ.

1. Lebensmittelverarbeitende Maschine (1), mit einer Hebeeinrichtung (2), insbesondere Füllmaschineüber die ein in einer Aufnahme (5) gehaltener Behälter (3) für Lebensmittel aus einer unteren Position (U) in eine obere Entleerposition (E) und zurück bewegbar ist,
**gekennzeichnet durch**
eine Projektionseinrichtung (7), die derart ausgebildet und angeordnet ist, dass ein optisches Warnsymbol (6) auf und/oder über den Boden (9) projiziert werden kann, um einen durch die Hebeeinrichtung (2) bedingten Kollisions-Gefahrenbereich zu kennzeichnen und **dadurch, dass**
die Projektionseinrichtung (7) entweder derart angeordnet ist, dass das Warnsymbol (6) zumindest teilweise auf einen Bereich des Bodens projizierbar ist, der unterhalb der Aufnahme (5) mit eingesetzten Behälter (3) liegt, wenn man die Aufnahme (5) in einer unteren Position (U) betrachtet, oder diesen Bereich zumindest abschnittsweise umgibt und/oder
die Projektionseinrichtung (7) derart angeordnet ist, dass das Warnsymbol (6) zumindest teilweise in oder über einen Bereich der Aufnahme (5) mit eingesetztem Behälter (3) projizierbar ist, wenn man die Aufnahme (5) in einer unteren Position (U) betrachtet, oder diesen Bereich zumindest teilweise umgibt.

2. Lebensmittelverarbeitende Maschine (1) nach Anspruch 1, **dadurch gekennzeichnet, dass** die lebensmittelverarbeitende Maschine (1) ein Gehäuse (8) umfasst, wobei die Projektionseinrichtungen (7) derart angeordnet ist, dass das Warnsymbol (6) seitlich neben dem Gehäuse auf und/oder über den Boden (9) projiziert werden kann.

3. Lebensmittelverarbeitende Maschine (1) nach Anspruch 1 oder 2, **dadurch gekennzeichnet, dass** die lebensmittelverarbeitende Maschine (1) eine Einrichtung zur Aufnahme des Lebensmittels (4) aus dem Behälter (3), insbesondere einen Fülltrichter (4), Bodentrichter oder Silo aufweist, wobei die Projektionseinrichtung (7) derart angeordnet ist, dass das Warnsymbol (6) seitlich neben der Einrichtung auf und/oder über den Boden (9) projiziert werden kann.

4. Lebensmittelverarbeitende Maschine (1) nach mindestens einem der Ansprüche 1-3, **dadurch gekennzeichnet, dass** die Hebeeinrichtung (2) eine Armhebeeinrichtung, eine Masthebeeinrichtung oder eine Kippeinrichtung vom Typ Swing-Loader ist.

5. Lebensmittelverarbeitende Maschine (1) nach mindestens einem der Ansprüche 1-4, **dadurch gekennzeichnet, dass** die Projektionseinrichtung (7) einen optischen Projektor, einen Projektor zum Erzeugen eines virtuellen Bildes im Raum, insbesondere einen 3D Hologramm Projektor umfasst.

6. Lebensmittelverarbeitende Maschine (1) nach mindestens einem der Ansprüche 1-4, **dadurch gekennzeichnet, dass**
die Projektionseinrichtung (7) an der lebensmittelverarbeitenden Maschine angeordnet ist, insbesondere am Gehäuse (8) der lebensmittelverarbeitenden Maschine (1), insbesondere in der Seitenwand (11) integriert ist oder
an einer Einrichtung zur Aufnahme des Lebensmittels (4), insbesondere einem Fülltrichter (4), Bodentrichter oder Silo, oder
am Boden der lebensmittelverarbeitenden Maschine (1).

7. Lebensmittelverarbeitende Maschine (1) nach mindestens einem der Ansprüche 1-6, **dadurch gekennzeichnet, dass** die Projektionseinrichtung (7) an der Hebeeinrichtung (2) angeordnet ist.

8. Lebensmittelverarbeitende Maschine (1) nach mindestens einem der Ansprüche 1-7**dadurch gekennzeichnet, dass** die Projektionseinrichtung (7) an einem statischen Teil der lebensmittelverarbeitenden Maschine (1) befestigt ist.

9. Lebensmittelverarbeitende Maschine (1) nach mindestens einem der Ansprüche 1-8, **dadurch gekennzeichnet, dass** die lebensmittelverarbeitende Maschine (1) eine Steuerung (10) umfasst, über die die Projektionseinrichtung (7) ansteuerbar ist, wobei die Projektionseinrichtung (7) über die Steuerung (11) ein- und ausschaltbar ist und spätestens dann zur Erzeugung des optischen Warnsignals (6) angeschaltet wird, wenn die Hebeeinrichtung (2) ein Signal zum Anheben der Aufnahme (5) von der Steuerung (10) erhält.

10. Lebensmittelverarbeitende Maschine (1) nach mindestens einem der Ansprüche 1-10, **dadurch gekennzeichnet, dass** die Projektionseinrichtung (7) separat befestigt ist, insbesondere an einer Wand, Decke oder separaten Halterung und mit einer Steuereinrichtung (10) der lebensmittelverarbeitenden Maschine (1) verbunden ist.

11. Verfahren zum Beschicken einer lebensmittelverarbeitenden Maschine nach mindestens einem der Ansprüche 1- 10, **dadurch gekennzeichnet, dass** ein Behälter mit Lebensmitteln in einer Aufnahme (5) einer Hebeeinrichtung (2) der lebensmittelverarbeitenden Maschine (1) aufgenommen wird und der in der Aufnahme gehaltene Behälter (3) aus einer unteren Position (U) in eine obere Entleerposition (E) angehoben, entleert und zurückbewegt wird,
**dadurch gekennzeichnet, dass**
über eine Projektionseinrichtung (7) ein optisches Warnsymbol (6) auf und/oder über den Boden projiziert wird um einen Kollision-Gefahrenbereich zu kennzeichnen wobei
die Projektionseinrichtung (7) entweder derart angeordnet ist, dass das Warnsymbol (6) zumindest teilweise auf einen Bereich des Bodens projiziert wird, der unterhalb der Aufnahme (5) mit eingesetzten Behälter (3) liegt, wenn man die Aufnahme (5) in einer unteren Position (U) betrachtet, oder diesen Bereich zumindest abschnittsweise umgibt und/oder
die Projektionseinrichtung (7) derart angeordnet ist, dass das Warnsymbol (6) zumindest teilweise in oder über einen Bereich der Aufnahme (5) mit eingesetztem Behälter (3) projiziert wird, wenn man die Aufnahme (5) in einer unteren Position (U) betrachtet, oder diesen Bereich zumindest teilweise umgibt.

12. Hebeeinrichtung (2) für eine lebensmittelverarbeitende Maschine (1), insbesondere nach mindestens einem der Ansprüche 1-11, über die ein in einer Aufnahme (5) gehaltener Behälter (3) für Lebensmittel aus einer unteren Position (U) in eine obere Entleerposition (E) und zurück bewegbar ist, **gekennzeichnet durch**
eine Projektionseinrichtung (7), die derart ausgebildet und angeordnet ist, dass ein optisches Warnsymbol (6) auf und/oder über den Boden (9) projiziert werden kann, um einen durch die Hebeeinrichtung (2) bedingten Kollisions-Gefahrenbereich zu kennzeichnen wobei
die Projektionseinrichtung (7) entweder derart angeordnet ist, dass das Warnsymbol (6) zumindest teilweise auf einen Bereich des Bodens projizierbar ist, der unterhalb der Aufnahme (5) mit eingesetzten Behälter (3) liegt, wenn man die Aufnahme (5) in einer unteren Position (U) betrachtet, oder diesen Bereich zumindest abschnittsweise umgibt und/oder
die Projektionseinrichtung (7) derart angeordnet ist, dass das Warnsymbol (6) zumindest teilweise in oder über einen Bereich der Aufnahme (5) mit eingesetztem Behälter (3) projizierbar ist, wenn man die Aufnahme (5) in einer unteren Position (U) betrachtet, oder diesen Bereich zumindest teilweise umgibt.
